# EUROPEAN PATENT APPLICATION

(11) **EP 4 019 339 A1**
(43) Date of publication of application: **29.06.2022**
(21) Application number: 20856459.1
(22) Date of filing: 21.08.2020
(51) Int. Cl.: B60R 16/02, G06F 11/20, B60W 50/023

(54) **CENTRAL PROCESSING UNIT**

(30) Priority: 30.08.2019 JP 2019158526
(71) Applicant: MAZDA MOTOR CORPORATION, Hiroshima 730-8670 (JP); TOYOTA JIDOSHA KABUSHIKI KAISHA, Toyota-shi Aichi 471-8571 (JP)
(72) Inventor: YAMASHITA Tetsuhiro, Aki-gun, Hiroshima 730-8670 (JP); ISHIBASHI Masato, Aki-gun, Hiroshima 730-8670 (JP); HIRANO Takahiro, Toyota-shi, Aichi 471-8571 (JP)
(74) Representative: Laufhütte, Dieter
(86) International application number: PCT/JP2020/031667
(87) International publication number: WO 2021/039643

(57) **Abstract**

About a central arithmetic unit in an in-vehicle network system, the configuration which can easily correspond to a wide range of vehicle types and grades is provided. The central arithmetic unit (10) provided in the in-vehicle network system includes a main function calculation unit (11) for realizing main functions including at least driving assistance, and an autonomous driving calculation unit (12) for performing calculation for autonomous driving. The main function calculation unit (11) and the autonomous driving calculation unit (12) are divided into different function blocks.

## Description

### TECHNICAL FIELD

The art disclosed herein relates to a central arithmetic unit included in an in-vehicle network system.

### BACKGROUND ART

Patent Document 1 discloses a configuration of an in-vehicle network including a central gateway. A plurality of electronic control units (ECUs) are connected to the central gateway through Ethernet (registered trademark).

### CITATION LIST

### PATENT DOCUMENT

Patent Document 1: JP-A-2019-29992

### SUMMARY OF THE INVENTION

### TECHNICAL PROBLEM

Recently, the development of autonomous driving system has been promoted nationally. In the autonomous driving system, generally, external environment information is acquired by a camera or the like, and the central arithmetic unit calculates the route to be traveled by the vehicle based on the acquired external environment information. Based on this calculation result, various actuators mounted on the vehicle are controlled. Further, the sensor signal is input into the central arithmetic unit from various sensors mounted on the vehicle. Control signals and sensor signals are transmitted through the in-vehicle network system.

In the future, a configuration that can accommodate a wide range of scalability is required for the central arithmetic unit. That is, the level required for autonomous driving varies depending on the type and grade of the vehicle. For example, autonomous driving with very high accuracy is required for a certain high grade, autonomous driving at a moderate level is sufficient for a medium class car, and in some car models, driving assistance is main and functions of autonomous driving may be at a low level. In such a case, the central arithmetic unit included in the in-vehicle network system is required to have a configuration that can easily cope with a wide range of vehicle types and grades.

Arts disclosed herein have been made in view of the above, and an object thereof is, regarding the central arithmetic unit provided in the vehicle-mounted network system, to provide a configuration that can easily broadly respond to the vehicle type and grade.

### SOLUTION TO THE PROBLEM

To solve the above problems, in the art disclosed herein, a central arithmetic unit provided in an in-vehicle network system includes a main function calculation unit that realizes main functions including at least driving assistance, and an autonomous driving calculation unit that performs calculation for autonomous driving, and the main functional unit and the autonomous driving calculation unit are configured into different functional blocks separately.

According to this configuration, the central arithmetic unit provided in the in-vehicle network system includes a main function calculation unit for realizing main functions including at least driving assistance, and an autonomous driving calculation unit for performing calculation for autonomous driving. Since the main functional unit and the autonomous driving calculating unit are divided into different functional blocks, integrated circuit (IC) chips to be mounted on the functional blocks can be separately selected according to the vehicle type and grade. As a result, the central arithmetic unit can easily correspond to a wide range of scalability.

The central arithmetic unit may include a backup calculation unit that realizes a backup function for autonomous driving, and the backup calculation unit may be configured as a function block different from the main function calculation unit and the autonomous driving calculation unit.

According to this configuration, even for the backup calculation unit, since the IC chip to be mounted can be selected in accordance with the vehicle type and grade independently of the main function calculation unit and the autonomous driving calculation unit, the central arithmetic unit can easily correspond to a wide range of scalability.

Further, the central arithmetic unit may include a first Ethernet switch for transmitting and receiving an Ethernet signal to and from a zone ECU mounted on a vehicle, the first Ethernet switch connected to the main function calculation unit and the autonomous driving calculation unit, and a second Ethernet switch for transmitting and receiving an Ethernet signal to and from the zone ECU, the second Ethernet switch connected to the main function calculation unit and the backup calculation unit,.

According to this configuration, in the in-vehicle network system, the double system of the control is ensured from the inside of the most upstream central arithmetic unit, so it is possible to ensure the functional safety of the vehicle more reliably.

### ADVANTAGES OF THE INVENTION

According to the technique disclosed herein, the central arithmetic unit included in the in-vehicle network system can be easily and widely applied to vehicle types and grades.

### BRIEF DESCRIPTION OF THE DRAWINGS

FIG. 1 is a diagram showing a configuration example of an in-vehicle network system.
FIG. 2 is a diagram showing an example of the configuration of the central arithmetic unit.
FIG. 3 is an image diagram showing an implementation of the central arithmetic unit.

### DESCRIPTION OF EMBODIMENT

Hereinafter, an exemplary embodiment will be described in detail with reference to the drawings. Note that in this specification, the devices that govern the travel control such as sensors and actuators mounted on the vehicle are referred to as in-vehicle devices, or simply referred to as devices.

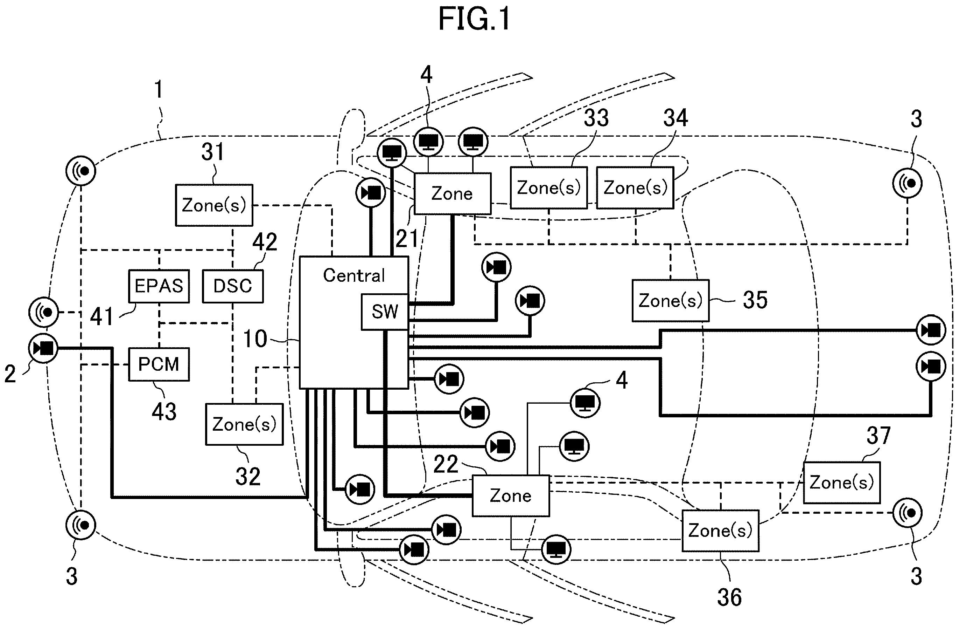

FIG. 1 is a diagram showing a configuration example of an in-vehicle network system. The in-vehicle networking system of FIG. 1 is mounted on a vehicle 1 (indicated by a two-dot chain line in FIG. 1) and includes a central arithmetic unit (also referred to as a central electronic control unit (ECU), denoted as Central in FIG. 1) 10, backbone bus ECUs 21 and 22 (denoted as Zone in FIG. 1) and local bus ECUs 31, 32, 33, 34, 35, 36 and 37 (denoted as Zone(s) in FIG. 1). The backbone bus ECUs 21 and 22 and the local bus ECUs 31 to 37 are examples of zone ECUs. Zone ECU refers to an ECU that is installed in each location of the vehicle 1 and performs input and output of signals to and from the in-vehicle device.

The in-vehicle network system of FIG. 1 is connected to the camera 2, the radar 3 and the display 4 which are installed in the vehicle 1. In addition, although not shown, various in-vehicle devices are connected to the in-vehicle network system of FIG. 1. Note that in FIG. 1, the backbone bus by Ethernet (registered trademark) is shown in a thick solid line, the local bus by controller area network (CAN) is shown in a dashed line. Further, the signal line by low voltage differential signaling (LVDS) for connecting the camera 2 and the central arithmetic unit 10 is shown by a solid and medium-thick line, and the local bus by the Ethernet for connecting the display 4 and the backbone bus ECUs 21 and 22 is shown by a solid and thin line.

The central arithmetic unit 10 and the backbone bus ECUs 21 and 22 are connected through a backbone bus by Ethernet. The central arithmetic unit 10 and the local bus ECUs 31 and 32 are connected through a local bus by CAN. The backbone bus ECU 21 and the local bus ECUs 33, 34 and 35 are connected through a local bus by CAN. The backbone bus ECU 22 and the local bus ECUs 36 and 37 are connected through a local bus by CAN.

To enable the autonomous driving and assist driving of the vehicle 1, the central arithmetic unit 10 receives the output or the like of the sensors mounted on the vehicle 1, calculates the route to be traveled by the vehicle 1, and determine the movement of the vehicle 1 for following the route. The central arithmetic unit 10 includes, for example, a processor composed of one or more integrated circuit (IC) chips, and may have an artificial intelligence (AI) function. Sensors for outputting information to the central arithmetic unit 10 includes, for example, a camera for shooting an external environment, a radar for detecting a target or the like outside the vehicle, a global positioning system (GPS ) sensor for detecting the position of the vehicle, a vehicle state sensor for detecting the behavior of the vehicle such as vehicle speed, acceleration and yaw rate, and an occupant state sensor for acquiring the state of the occupant of the vehicle such as an in-vehicle camera. Further, communication information from another vehicle located around the vehicle, and traffic information from the navigation system may be input into the central arithmetic unit 10.

In the vehicle-mounted network of FIG. 1, the camera 2 installed in the vehicle 1 is connected to the central arithmetic unit 10 by a signal line by LVDS. In this case, a dedicated communication protocol is used for communication between the camera 2 and the central arithmetic unit 10, giving priority to cost and safety.

The backbone bus ECUs 21 and 22 are provided on the passenger side and the driver side in front of the front seat, respectively. As described above, the backbone bus ECU 21 is connected to the local bus ECUs 33, 34 and 35 through the local bus, and the backbone bus ECU 22 is connected to the local bus ECUs 36 and 37 through the local bus. The backbone bus ECUs 21 and 22 output video signals to the display 4 through a local bus by Ethernet. The backbone bus ECUs 21 and 22 also receives the output of the radar 3 installed at the rear of the vehicle through the local bus.

Local bus ECUs 31 and 32 are provided on the right and left sides, respectively, in the engine compartment in front of the vehicle. The local bus ECUs 31 and 32 are connected to an electric power assist steering (EPAS) unit 41, a dynamic stability control (DSC) unit 42, and a powertrain control module (PCM) unit 43 through a local bus. The local bus ECUs 31 and 32 also receives the output of the radar 3 installed in front of the vehicle through a local bus. The local bus ECUs 31 and 32 transmits and receives CAN signals to and from the central arithmetic unit 10. The CAN signals transmitted from the central arithmetic unit 10 to the local bus ECUs 31 and 32 include a control signal of the engine or the like. Local bus ECUs 31 and 32 output the control signal included in the CAN signals transmitted from the central arithmetic unit 10 as it is, or output a local interconnect network (LIN) signal after protocol conversion to the control signal, or output an analog control signal after signal conversion to the control signal.

### <Configuration of Central arithmetic unit>

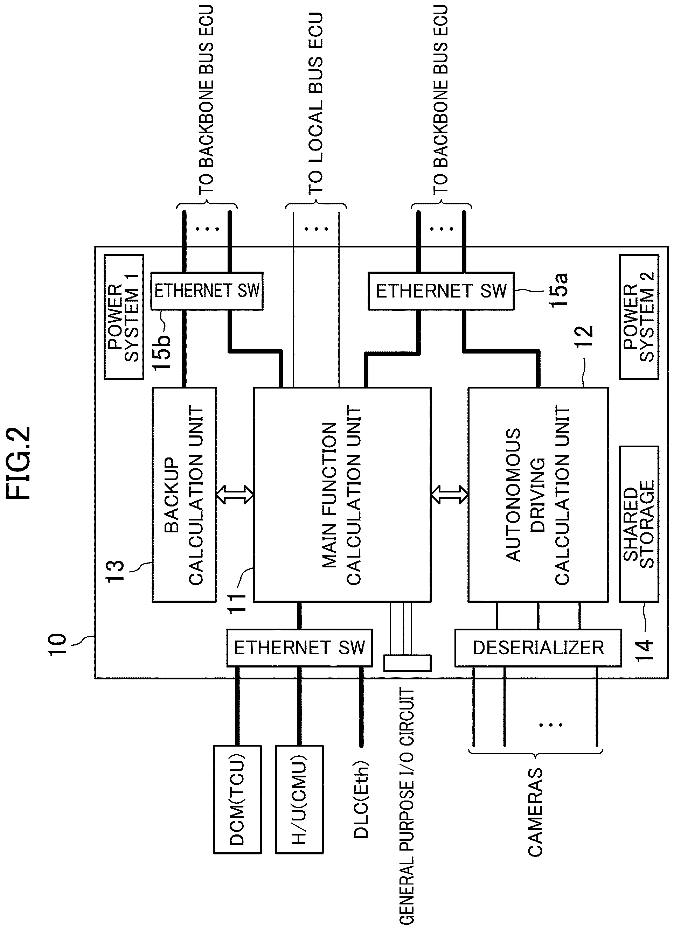

FIG. 2 shows an example of the configuration of the central arithmetic unit 10. In the configuration of FIG. 2, the central arithmetic unit 10 includes three functional blocks, specifically, a main function calculation unit 11, an autonomous driving calculation unit 12, and a backup calculation unit 13. The main function calculation unit 11 and the autonomous driving calculation unit 12 are configured into different functional blocks separately. The backup calculation unit 13 is configured as a separate functional block from the main function calculation unit 11 and the autonomous driving calculation unit 12, and the power supply system thereof is separate from that of the main function calculation unit 11 and the autonomous driving calculation unit 12. The central arithmetic unit 10 includes a shared storage 14 used by the main function calculation unit 11, the autonomous driving calculation unit 12 and the backup calculation unit 13. Each of the main function calculation unit 11, the autonomous driving calculation unit 12 and the backup calculation unit 13 may be constituted by a single IC chip, or may be constituted by a plurality of IC chips.

The main function calculation unit 11 is a functional block for realizing main functions including driving assistance at least. The main function calculation unit 11 executes control for advanced driver-assistance systems (ADAS) and connected car systems. In addition to ADAS and connected car systems, the main function calculation unit 11 executes, for example, a security gateway, power management, vehicle electrical control, power train/chassis integrated control, and the like.

The autonomous driving calculation unit 12 is a functional block for performing calculation for autonomous driving. The autonomous driving calculation unit 12, for example, receives the output of the camera and radar installed in the vehicle, estimates the external environment, to determine the traveling route of the vehicle. The autonomous driving calculation unit 12 includes, for example, an external environment estimation unit that estimates an external environment including a road or an obstacle using an external environment model generated by deep learning. The autonomous driving calculation unit 12 may also include a driver state estimating unit for estimating the driver's health state and emotion, or body behavior from the image captured by the camera installed in the vehicle interior. The function of the autonomous driving calculation unit 12 becomes different depending on the level of autonomous driving required for the type and grade or the like of the vehicle.

The backup calculation unit 13 is a functional block for realizing a backup function of autonomous driving. The backup calculation unit 13 is configured, for example, to recognize an object that is present outside the vehicle, sets a safety area in which the vehicle can safely pass, and sets a path along which the vehicle passes through the safety area as a travel route to be passed, in accordance with a method conventionally employed in an automobile. By providing the backup calculation unit 13 for performing the so-called rule-based judgment and process, it is possible to realize the functional safety levels corresponding to automotive safety integrity level (ASIL) - D, for example.

Here, in the configuration of FIG. 2, a new function required for autonomous driving, and a function that needs to be enhanced in performance for autonomous driving such as image processing, is aggregated to the autonomous driving calculation unit 12. On the other hand, functions other than autonomous driving such as driving assistance is aggregated to the main function calculation unit 11. That is, the configuration of FIG. 2 has a form where the autonomous driving calculation unit 12 has been added on the main function calculation unit 11 for realizing functions other than autonomous driving. Thus, the central arithmetic unit 10 is easy to correspond widely to the vehicle type and grade.

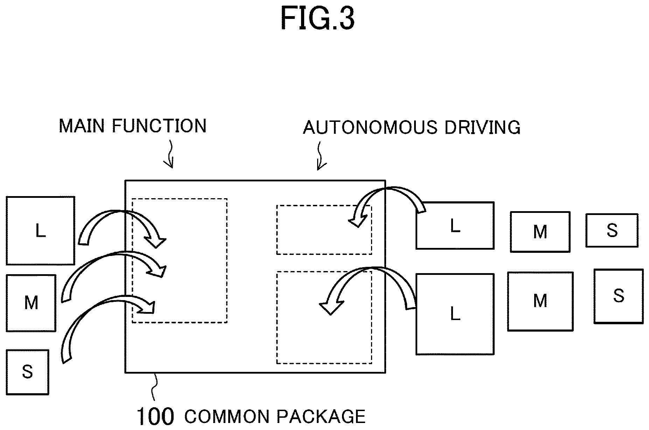

FIG. 3 is an image diagram showing an implementation of the central arithmetic unit. As shown in FIG. 3, the central arithmetic unit is realized in that an IC chip for realizing the main functions and another IC chip for realizing the autonomous driving calculation are respectively mounted on the common package 100. In Fig. 3, one IC chip realizes the main functions and two IC chips realize the autonomous driving calculation. The IC chips mounted on the common package 100 are selected according to the type and grade of the vehicle, for each of the main functions and the autonomous driving. In FIG. 3, the IC chip having the highest function is denoted as "L", the IC chip having the middle function is denoted as "M", and the IC chip having the lowest function is denoted as "S".

Thus, according to the present embodiment, it is possible to select an IC chip to be mounted separately for the main function calculation unit 11 and the autonomous driving calculation unit 12, depending on the vehicle type and grade. Therefore, the central arithmetic unit 10 is possible to easily correspond to a wide range of scalability.

Also, with respect to the backup calculation unit 13, since it is configured as a separate functional block from the main function calculation unit 11 and the autonomous driving calculation unit 12, it is possible to select an IC chip to be mounted depending on the vehicle type and grade, independently of the main function calculation unit 11 and the autonomous driving calculation unit 12. This allows the central arithmetic unit 10 to accommodate a wide range of scalability.

In the configuration of FIG. 2, two Ethernet switches for transmitting and receiving Ethernet signals to and from the backbone bus ECU are provided. That is, the first Ethernet switch 15a is connected to the main function calculation unit 11 and the autonomous driving calculation unit 12, and the second Ethernet switch 15b is connected to the main function calculation unit 11 and the backup calculation unit 13. Thus, in the in-vehicle network system, the double system of the control is ensured from the inside of the most upstream central arithmetic unit 10, so it is possible to ensure the functional safety of the vehicle more reliably.

The foregoing embodiments are illustrative only and are not to be construed as limiting the scope of the present disclosure. The scope of the present disclosure is defined by the claims, and all changes and modifications that fall within the scope of equivalents of the claims are within the scope of the present disclosure.

### INDUSTRIAL APPLICABILITY

The art disclosed herein is useful for adapting a central arithmetic unit included in the in-vehicle network system broadly to the type and grade of the vehicle.

### DESCRIPTION OF REFERENCE CHARACTERS

- 1: Vehicle
- 10: Central Arithmetic Unit
- 11: Main Function Calculation Unit
- 12: Autonomous Driving Calculation Unit
- 13: Backup Calculation Unit
- 15a: First Ethernet Switch
- 15b: Second Ethernet Switch
- 21, 22: Backbone Bus ECU (Zone ECU)
- 31 to 37: Local Bus ECU (Zone ECU)

## Claims

1. A central arithmetic unit provided in an in-vehicle network system, comprising:
a main function calculation unit that realizes main functions including at least driving assistance; and
an autonomous driving calculation unit that performs calculation for autonomous driving, wherein,
the main function calculation unit and the autonomous driving calculation unit are configured into different functional blocks separately.

2. The central arithmetic unit of claim 1, further comprising
a backup calculation unit that realizes a backup function for autonomous driving, wherein
the backup calculation unit is configured as a function block different from the main function calculation unit and the autonomous driving calculation unit.

3. The central arithmetic unit of claim 2, further comprising:
a first Ethernet switch for transmitting and receiving an Ethernet signal to and from a zone electronic control unit (ECU) mounted on a vehicle, the first Ethernet switch connected to the main function calculation unit and the autonomous driving calculation unit; and
a second Ethernet signal for transmitting and receiving an Ethernet signal to and from the zone ECU, the second Ethernet switch connected to the main function calculation unit and the backup calculation unit.
